# EUROPEAN PATENT SPECIFICATION

(11) **EP 1 040 697 B1**
(45) Date of publication and mention of the grant of the patent: **22.02.2006**
(21) Application number: 98962439.0
(22) Date of filing: 18.12.1998
(51) Int. Cl.: H04Q 7/38

(54) **PROCEDURE AND SYSTEM FOR SETTING UP A TELECOMMUNICATION CONNECTION**
VERFAHREN UND ANORDNUNG ZUM AUFBAU EINER TELEKOMMUNIKATIONSVERBINDUNG
PROCEDURE ET SYSTEME D'ETABLISSEMENT D'UNE CONNEXION DE TELECOMMUNICATION

(30) Priority: 31.12.1997 FI 974651
(43) Date of publication of application: 04.10.2000
(73) Proprietor: TeliaSonera Finland Oyj, 00510 Helsinki (FI)
(72) Inventor: ALA-LUUKKO, Sami, FIN-00280 Helsinki (FI); HUOSTILA, Tero, FIN-00100 Helsinki (FI)
(74) Representative: Simmelvuo, Markku Kalevi
(86) International application number: PCT/FI1998/000999
(87) International publication number: WO 1999/038346

(56) References cited:
- GB-A- 2 316 266
- US-A- 5 553 124

## Description

### SCOPE OF INVENTION

The present invention relates to telecommunication technology. Using the procedure and system of the invention, a telecommunication connection is set up in a mobile communication network by routing the connection on the basis of call price data or network configuration data.

### BACKGROUND OF INVENTION

When a GSM telephone (GSM, Global System for Mobile Communications) is used in another operator's network, this is called roaming. As GSM is becoming a world standard, international roaming traffic is becoming an important sub-area for mobile communication network operators.

Teleoperators have a plurality of roaming partners in different countries. This is because GSM operators have signed an agreement (MoU, Memorandum of Understanding) which provides that all member operators have to make roaming agreements with other member operators. Even if roaming agreements should not be made with all operators, there will still be an intensive growth in roaming traffic. This puts a strain on the resources of both the international network and the parties handling the billing tasks. In addition, the amount of data to be processed as well as the risks of abuse increase. This creates pressures towards accomplishment of more effective routing and billing systems.

Teleoperators receive information on call charges for international calls from other teleoperators in conjunction with the roaming agreement. According to the agreement, teleoperators must inform other teleoperators if there are changes in the prices of calls subject to a roaming agreement. This allows the call price data of the calling subscriber's home operator to be maintained up to date.

### PRIOR ART

Prior-art routing solutions applied in telecommunication and telephone networks are based on technical factors, such as physical route length or network load. There are two different methods used for the routing of GSM calls. One is so-called standard routing, and the other is optimal routing as defined in the GSM specifications.

The SOR method (SOR, Support of Optimal Routing) used in the GSM system is a property of a mobile communication network that enables calls to be routed directly to the actual location of a mobile station, or to a number indicated by a call transfer setting, without routing it via the subscriber's home PLMN (PLMN, Public Land Mobile Network). An IPLMN (Interrogating PLMN) handles the call and decides about possible optimisation of each call in accordance with the information provided by the subscriber's home PLMN. When optimal routing is possible for the subscribers in the network, the home PLMN either enables or disables optimal routing for the connection to be set up.

The SOR method has the drawback that it only takes into account situations where the calling and called subscribers are located in the same country or the called subscriber is located in his/her home network. Moreover, the first stage of the SOR method only allows calls from a mobile station to a mobile station and call transfer from a mobile station to a wired-network telephone number. It does not allow e.g. calls from a mobile station to a subscriber in a wired telephone network. It has been estimated that the SOR method can only be utilised in a few percent of all calls to be set up. A problem with prior-art methods is especially that they do not take into account the costs incurred by the operator when calls are set up and routed via and in the areas of mobile switching centres of other teleoperators.

Publication US 5,553,124 discloses a call initiation service associated with fixed telephone network. In the call initiation service a call initiation point is selected so that the charges incurred on the user are minimized. The user calls an initiating switch associated with the service and provides the desired called party number. The initiating switch registers a call detail record associated with the call comprising such data as the calling line information and the called number. After that, the initiating switch clears the call. At that time the user must place the receiver on-hook in order to be able to receive later the initiated call. The initiating switch delivers the call detail record to a network server. The server maintains up-to-date call charges for each operator. Using the call detail record and the call charges for each operator, the server finds out the cheapest call initiation point in the fixed telephone network. By a call initiation point is meant in particular the operator from whose network the call charges for the call to be initiated are minimized. The server sends a call initiation requests to a second switch corresponding to the call initiation point. Thereupon, the second switch places calls to the calling and the called subscriber and connects the speech circuits leading to the subscribers.

The disadvantage of the solution disclosed in publication US 5,553,124 is that the user must place an initiating call to the initiating switch, hang-up the call and wait for the return call from the second switch. This brings about, for example, the possibility that another call received in between the hanging-up and the return call and interrupts thus the call attempt. The publication 5,553,124 does not teach the minimization of the transmission costs for the network operator in delivering a call between a calling subscriber's visited mobile switching centre and the called party mobile switching centre.

The object of the present invention is to eliminate the drawbacks described above or at least to significantly reduce them.

A specific object of the present invention is to disclose a new type of procedure and system in which the costs incurred by the teleoperator when calls are set up and routed via and in the areas of mobile switching centres of foreign teleoperators are taken into account. A further object of the invention is to enable a procedure and system in which a communication server determines an optimal route from calling subscriber to called subscriber. For this optimisation, the communication server uses the call price data specified in roaming agreements, stored in a database.

As for the features characteristic of the invention, reference is made to the claims.

### BRIEF SUMMARY

The system of the invention comprises the calling subscriber's terminal equipment, the called subscriber's terminal equipment, the home location register of the calling subscription and the home location register of the called subscription. In addition, the telecommunication network comprises the calling subscriber's visited mobile switching centre (VMSCA), the mobile switching centre under which the called subscriber is located, and a communication server for route optimisation for the connection to be set up. In the procedure of the invention, the visited mobile switching centre contacts the communication server when it detects that the calling subscriber is trying to set up a connection from his mobile station. The communication server requests location information regarding the called subscriber from the home location register HLR of the called subscription. This makes it possible to determine the teleoperator in whose area the called subscriber's mobile station is located. The called subscriber's home location register returns the location information regarding the called subscriber to the communication server. In addition to this, the location of the calling subscriber's mobile station is determined. The communication server determines the prices of alternative routes for the call to be set up, using the called subscriber's MSISDN (MSISDN, Mobile Subscriber ISDN Number) and MSRN (MSRN, Mobile Subscriber Roaming Number) numbers and a call price database located in the communication server. Once the route for the telecommunication connection has been optimised, the communication server returns information corresponding to the optimal route to the visited mobile switching centre, which sets up a connection from the visited mobile switching centre to the mobile switching centre.

The procedure and system of the invention make it possible to set up a telecommunication connection from a calling subscriber's mobile station located in another teleoperator's area to a called subscriber's mobile station so as to minimise the cost of the telecommunication connection to the calling subscriber's service operator.

### LIST OF DRAWINGS

In the following, the invention will be described in detail by the aid of examples of its embodiments, wherein
Fig. 1 presents an embodiment of the system of the invention;
Fig. 2 presents an example block diagram representing a system according to Fig. 1;
Fig. 3 presents an example signalling diagram for a system according to Fig. 1; and
Fig. 4 presents an embodiment according to the invention.

### DETAILED DESCRIPTION

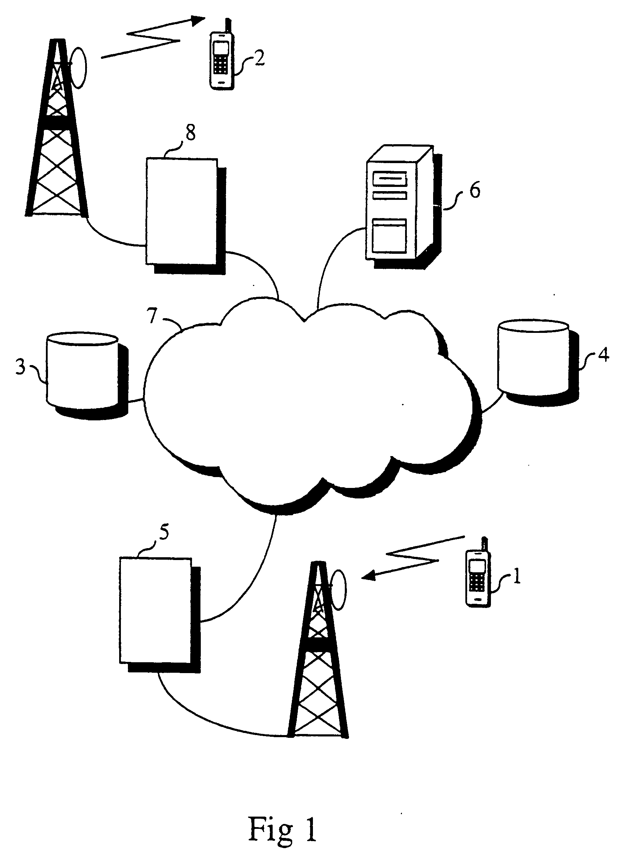

The system illustrated by Fig. 1 comprises terminal equipment 1 of subscriber A (calling subscriber), terminal equipment 2 of subscriber B (called subscriber), a home location register 3 for subscription A, a home location register 4 for subscription B, a visited mobile switching centre 5 for subscriber A, a communication server 6 for route optimisation for the telecommunication connection to be set up, and the mobile switching centre 8 under which the mobile station 2 of subscriber B is located, all connected to a telecommunication network 7. The terminal equipment 1 of subscriber A and the terminal equipment 2 of subscriber B are preferably GSM telephones. The communication server is e.g. a so-called CSE server (CSE, CAMEL Service Equipment). The CAMEL architecture (CAMEL, Customised Applications for Mobile Network Enhanced Logic) is designed to provide operator-specific intelligent-network services even to those subscribers who have moved outside their own operator's mobile communication network and are under the international roaming system.

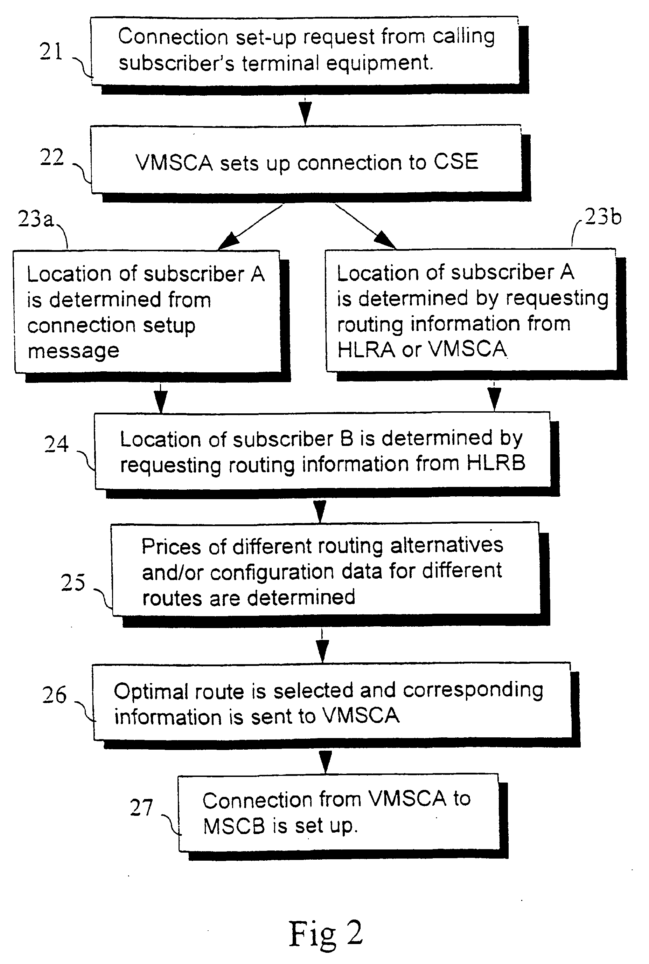

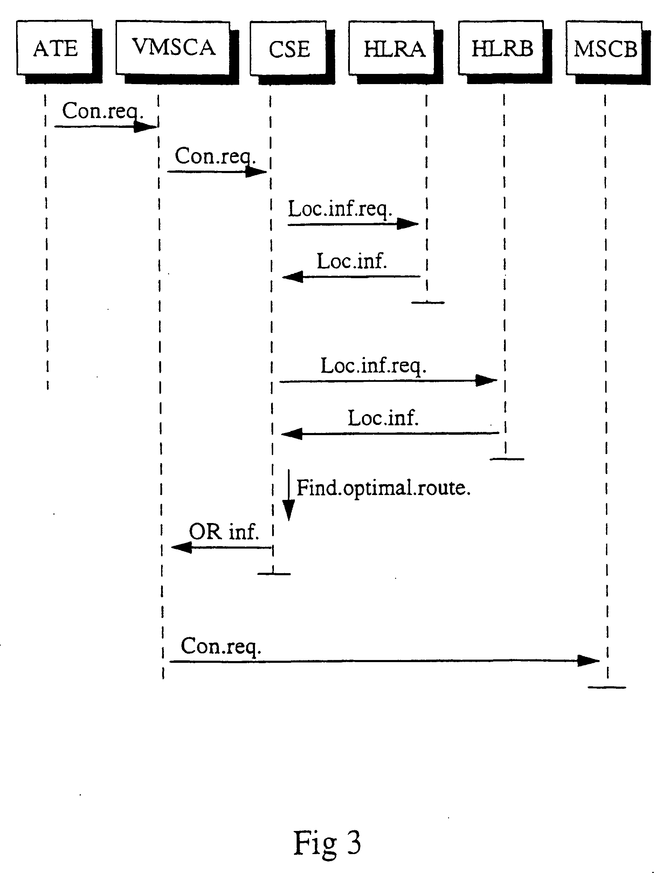

In Fig. 2, block 21, subscriber A dials the telephone number of subscriber B via his/her terminal device 1 and presses a "ring" key, whereupon the terminal device 1 sends a connection setup request to the calling subscriber's visited mobile switching centre 5. In block 22, the visited mobile switching centre 5 sets up a telecommunication connection to the communication server 6. This connection generally also transmits location information regarding the first terminal device 1 to the communication server 6, giving the location with a sufficient accuracy (block 23a). Alternatively, the communication server 6 may also send a request for location information regarding terminal device 1 to the calling subscriber's visited mobile switching centre 5 or home location register 3. This option is represented by block 23b. In block 24, the communication server 6 determines the location of the second terminal device 2 by sending a corresponding location information request (Fig. 3, Loc.inf.req.) to the home location register 4 of subscriber B. In block 25, the communication server 6 determines different routing alternatives based on the locations of the terminal devices and the price data and/or configuration data for different routes. In block 26, an optimal route is selected and corresponding information is sent to the visited mobile switching centre 5. In block 27, a telecommunication connection is set up from the visited mobile switching centre 5 to the mobile switching centre 8 on the basis of information corresponding to the optimised route.

In Fig. 3, the terminal equipment (ATE) of subscriber A sends a connection set-up request (Con.req.) to the visited mobile switching centre (VMSCA). The visited mobile switching centre (VMSCA) sends the connection set-up request (Con.req.) further to the communication server (CSE). Location information giving the location of the terminal equipment of subscriber A with sufficient accuracy is generally transmitted together with the connection set-up request. The communication server (CSE) may also request location information (Loc. inf. req.) regarding subscriber A from subscriber A's home location register (HLRA) or directly from the visited mobile switching centre (VMSCA).

Next, the communication server (CSE) determines the location of the terminal equipment of subscriber B by sending a location information request (Loc.inf.req.) to subscriber B's home location register (HLRB), which returns the location information (Loc.inf.) to the communication server (CSE). After this, based on the location of the terminal equipment of subscriber A and subscriber B, the communication server (CSE) determines the various routing alternatives and corresponding price data and/or configuration information regarding different routes (Find.optimal.route). After selecting an optimal route, the CSE sends corresponding information (OR inf.) to the visited mobile switching centre (VMSCA). The visited mobile switching centre (VMSCA) then sends a connection set-up request (Con.req.) to the mobile switching centre (MSCB) and sets up a connection from the visited mobile switching centre (VMSCA) to the mobile switching centre (MSCB) on the basis of information corresponding to the optimised route.

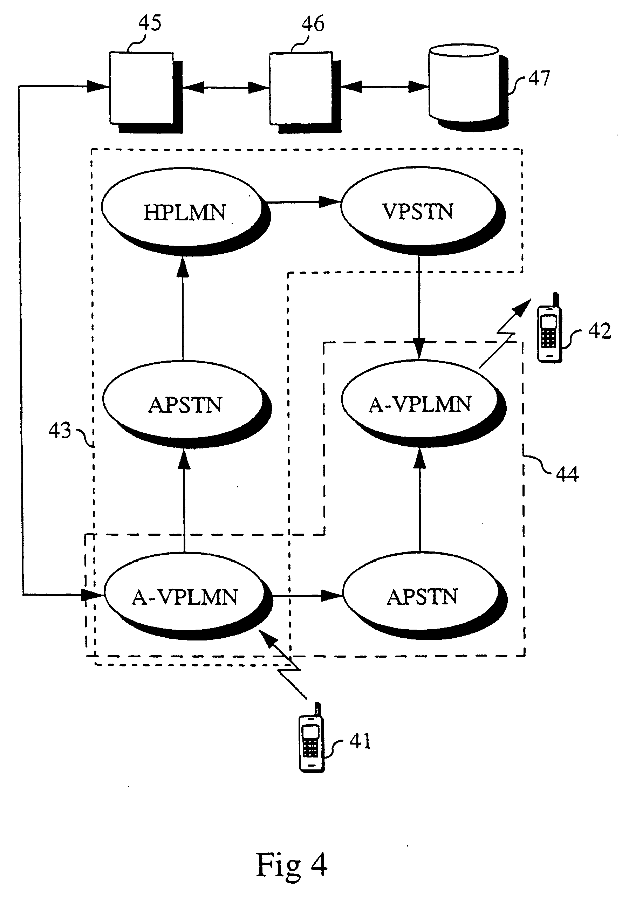

Fig. 4 presents an example of a solution for setting up a telecommunication connection on the basis of network configuration data. Network configuration data and call price data are maintained in a database. The aim is to find for a telecommunication connection a routing alternative that will minimise the use of telephone or mobile communication networks of foreign teleoperators. The aim could be e.g. that the call be routed as far as possible exclusively via the telecommunication network of the calling subscriber's service operator and/or operator alliance. If routing exclusively via telecommunication networks of the service operator and/or operator alliance is impossible, then the aim can be altered e.g. so that routes involving switching centres of only one foreign teleoperator are used.

In the example illustrated by Fig. 4, a route is found that takes the call exclusively via the networks of the home operator and operator alliance. The mobile station 41 of subscriber A is located in a foreign teleoperator's network and sends a connection set-up request to the mobile station 42 of subscriber B. The call is first connected to the foreign teleoperator's network (A-VPLMN), where the visited mobile switching centre sets up a connection via a service node 15 to a service control logic unit 46. The control logic unit 46 determines the various routing alternatives as well as the corresponding teleoperators. This is effected using data stored in a service database 47. In routing alternative 43, the call would be routed via the operator alliance (APSTN) to the calling subscriber's home network (HPLMN). However, routing alternative 43 is rejected because the route would next take the call from the calling subscriber's home network (HPLMN) to a foreign teleoperator's network (VPSTN). Routing alternative 44 is accepted because it routes the call via the operator alliance (APSTN) to the area of the mobile communication network to which the mobile station of subscriber B is connected.

The present application is based on earlier Finnish application FI 981776 "Procedure and system for the setting up of a telecommunication connection", in which the applicant is the same as in the present application. The invention is not restricted to the examples of its embodiments described above, but many variations are possible within the scope of the inventive idea defined by the claims.

## Claims

1. Procedure for setting up a telecommunication connection in a telecommunication network (7), which comprises a calling subscriber's terminal equipment (1), a called subscriber's terminal equipment (2), a home location register (3) of the calling subscriber and a home location register (4) of the called subscriber, a calling subscriber's visited mobile switching centre (5), a communication server (6) for route optimisation for the connection to be set up, and a called subscriber's mobile switching centre (8), **characterised in that**
a telecommunication connection to the communication server (6) is set up when the visited mobile switching centre (5) receives a connection set-up request from the calling subscriber's terminal equipment (1);
the location of the calling subscriber's terminal equipment (1) in the telecommunication network (7) is determined in the communication server (6);
the location of the called subscriber's terminal equipment (2) in the telecommunication network (7) is determined;
the route for the telecommunication connection to be set up is optimised in the communication server (6) on the basis of call price data and/or network configuration data;
information corresponding to the optimised route is returned to the visited mobile switching centre (5); and
a telecommunication connection from the visited mobile switching centre (5) to the called subscriber's mobile switching centre (8) is set up on the basis of the information corresponding to the optimised route.

2. Procedure as defined in claim 1, **characterised in that** the location of the called subscriber's terminal equipment (2) in the telecommunication network (7) is determined by requesting location information regarding the called subscriber from the called subscriber's home location register (4).

3. Procedure as defined in claim 1 or 2, **characterised in that** the location of the calling subscriber's terminal equipment (1) in the telecommunication network (7) is determined
by requesting location information regarding the calling subscriber from the calling subscriber's home location register (3); or
by sending location information regarding the calling subscriber from the visited mobile switching centre (5) to the communication server (6).

4. Procedure as defined in any one of claims 1 - 3, **characterised in that**
the routing alternatives for the telecommunication connection to be set up are determined by means of the communication server (6) on the basis of the called subscriber's MSISDN number and/or tracing number;
call price data corresponding to the routing alternative is determined by means of the communication server (6);
an optimal route from the visited mobile switching centre (5) to the called subscriber's mobile switching centre (8) is determined by means of the communication server (6); and
information corresponding to the optimal route is returned to the visited mobile switching centre (5).

5. Procedure as defined in any one of claims 1 - 4, **characterised in that** the call price and/or network configuration data in the communication server (6) are updated.

6. System for the setting up of a telecommunication connection in a telecommunication network (7) comprising a calling subscriber's terminal equipment (1), a called subscriber's terminal equipment (2), a home location register (3) of the calling subscriber, a home location register (4) of the called subscriber, a calling subscriber's visited mobile switching centre (5), a communication server (6) for route optimisation for the connection to be set up, and a called subscriber's mobile switching centre (8), **characterised in that**
the visited mobile switching centre(5) is configured to set up a telecommunication connection to the communication server (6) when the visited mobile switching centre (5) receives a connection set-up request from the calling subscriber's terminal equipment (1), and to set up a telecommunication connection to the called subscriber's mobile switching centre (8) on the basis of information corresponding to an optimised route; and
the communication server (6) is configured to determine the location of the calling subscriber's terminal equipment (1) in the telecommunication network (7), to determine the location of the called subscriber's terminal equipment (2) in the telecommunication network (7), to optimise the route for the telecommunication connection to be set up on the basis of call price data and/or network configuration data, and to return information corresponding to the optimised route to the visited mobile switching centre (5).

7. System as defined in claim 6, **characterised in that**
the system comprises means for updating the call price data and/or network configuration data stored in the communication server (6).

## Patentansprüche

1. Verfahren zum Aufbauen einer Telekommunikationsverbindung in einem Telekommunikationsnetzwerk (7), welches Folgendes aufweist: ein Endgerät (1) eines anrufenden Teilnehmers; ein Endgerät (2) eines angerufenen Teilnehmers; ein Standortregister (3) des anrufenden Teilnehmers und ein Standortregister (4) des angerufenen Teilnehmers; eine vom anrufenden Teilnehmer besuchte Mobilvermittlungsstelle (5); einen Kommunikationsserver (6) zur Optimierung des Routings bzw. der Verbindungsstrecke für die aufzubauende Verbindung; und eine Mobilvermittlungsstelle (8) des angerufenen Teilnehmers, **dadurch gekennzeichnet, dass**
eine Telekommunikationsverbindung zu dem Kommunikationsserver (6) aufgebaut wird, wenn die besuchte Mobilvermittlungsstelle (5) eine Anforderung zum Verbindungsaufbau von dem Endgerät (1) des anrufenden Teilnehmers empfängt;
der Standort des Endgeräts (1) des anrufenden Teilnehmers in dem Telekommunikationsnetzwerk (7) in dem Kommunikationsserver (6) bestimmt wird;
der Standort des Endgeräts (2) des angerufenen Teilnehmers in dem Telekommunikationsnetzwerk (7) bestimmt wird;
die Route bzw. Verbindungsstrecke für die aufzubauende Telekommunikationsverbindung in dem Kommunikationsserver (6) auf der Grundlage von Anrufpreisdaten und/oder Netzwerkkonfigurationsdaten optimiert wird;
Informationen, die das optimierte Routing betreffen, an die besuchte Mobilvermittlungsstelle (5) zurückgegeben werden; und
eine Telekommunikationsverbindung von der besuchten Mobilvermittlungsstelle (5) zu der Mobilvermittlungsstelle (8) des angerufenen Teilnehmers auf der Grundlage der Informationen, die das optimierte Routing betreffen, aufgebaut wird.

2. Verfahren nach Anspruch 1, **dadurch gekennzeichnet, dass** der Standort des Endgeräts (2) des angerufenen Teilnehmers in dem Telekommunikationsnetzwerk (7) bestimmt wird, indem Standortinformationen, die den angerufenen Teilnehmer betreffen, aus dem Standortregister (4) des angerufenen Teilnehmers angefordert werden.

3. Verfahren nach Anspruch 1 oder 2, **dadurch gekennzeichnet, dass** der Standort des Endgeräts (1) des anrufenden Teilnehmers in dem Telekommunikationsnetzwerk (7) bestimmt wird, indem Standortinformationen, die den anrufenden Teilnehmer betreffen, aus dem Standortregister (3) des anrufenden Teilnehmers angefordert werden; oder
indem Standortinformationen, die den anrufenden Teilnehmer betreffen, von der besuchten Mobilvermittlungsstelle (5) an den Kommunikationsserver (6) gesendet werden.

4. Verfahren nach einem der Ansprüche 1 bis 3, **dadurch gekennzeichnet, dass**
die Routingalternativen für die aufzubauende Telekommunikationsverbindung mittels des Kommunikationsservers (6) auf der Grundlage der MSISDN-Nummer und/oder Tracing-Nummer des angerufenen Teilnehmers bestimmt werden;
die zu den Routingalternativen korrespondierenden Anrufpreisdaten mittels des Kommunikationsservers (6) bestimmt werden;
eine optimale Route von der besuchten Mobilvermittlungsstelle (5) zu der Mobilvermittlungsstelle (8) des angerufenen Teilnehmers mittels des Kommunikationsservers (6) bestimmt wird; und
Informationen, welche die optimale Route betreffen, an die besuchte Mobilvermittlungsstelle (5) zurückgegeben werden.

5. Verfahren nach einem der Ansprüche 1 bis 4, **dadurch gekennzeichnet, dass** die Anrufpreise und/oder Netzwerkkonfigurationsdaten in dem Kommunikationsserver (6) aktualisiert werden.

6. System zum Aufbau einer Telekommunikationsverbindung in einem Telekommunikationsnetzwerk (7), welches Folgendes aufweist: ein Endgerät (1) eines anrufenden Teilnehmers; ein Endgerät (2) eines angerufenen Teilnehmers; ein Standortregister (3) des anrufenden Teilnehmers; ein Standortregister (4) des angerufenen Teilnehmers; eine vom anrufenden Teilnehmer besuchte Mobilvermittlungsstelle (5); einen Kommunikationsserver (6) zur Optimierung des Routings bzw. der Verbindungsstrecke für die aufzubauende Verbindung; und eine Mobilvermittlungsstelle (8) des angerufenen Teilnehmers, **dadurch gekennzeichnet, dass**
die besuchte Mobilvermittlungsstelle (5) zum Aufbau einer Telekommunikationsverbindung zu dem Kommunikationsserver (6), wenn die besuchte Mobilvermittlungsstelle (5) eine Anforderung zum Verbindungsaufbau von dem Endgerät (1) des anrufenden Teilnehmers empfängt, und zum Aufbau einer Telekommunikationsverbindung zu der Mobilvermittlungsstelle (8) des angerufenen Teilnehmers auf der Grundlage von Informationen, die einer optimierten Route bzw. Verbindungsstrecke entsprechen, ausgebildet ist; und
der Kommunikationsserver (6) zu Folgendem ausgebildet ist: Bestimmung des Standorts des Endgeräts (1) des anrufenden Teilnehmers in dem Telekommunikationsnetzwerk (7); Bestimmung des Standorts des Endgeräts (2) des angerufenen Teilnehmers in dem Telekommunikationsnetzwerk (7); Optimierung der Route der aufzubauenden Telekommunikationsverbindung auf der Grundlage von Anrufpreisdaten und/oder Netzwerkkonfigurationsdaten; und Rückgabe von Informationen an die besuchte mobile Vermittlungsstelle (5), welche die optimierte Route betreffen.

7. System nach Anspruch 6, **dadurch gekennzeichnet, dass** das System Einrichtungen zur Aktualisierung der Anrufpreisdaten und/oder Netzwerkkonfigurationsdaten aufweist, die in dem Kommunikationsserver (6) gespeichert sind.

## Revendications

1. Procédure d'établissement d'une connexion de télécommunication dans un réseau de télécommunications (7), qui comprend un équipement formant terminal d'un abonné appelant (1), un équipement formant terminal d'un abonné appelé (2), un registre de localisation nominal (3) de l'abonné appelant et un registre de localisation nominal (4) de l'abonné appelé, un centre de commutation de services mobiles visité d'un abonné appelant (5), un serveur de communication (6) pour optimiser le trajet de la connexion qui doit être établie, et un centre de commutation de services mobiles d'un abonné appelé (8), la procédure étant **caractérisée en ce que** :
une connexion de télécommunication avec le serveur de communication (6) est établie lorsque le centre de commutation de services mobiles visité (5) reçoit une requête d'établissement de connexion de l'équipement formant terminal d'un abonné appelant (1) ;
la position de l'équipement formant terminal d'un abonné appelant (1) dans le réseau de télécommunications (7) est déterminée dans le serveur de communication (6) ;
la position de l'équipement formant terminal d'un abonné appelé (2) dans le réseau de télécommunications (7) est déterminée ;
le trajet de la connexion de télécommunications qui doit être établie est optimisé dans le serveur de communication (6) sur la base de données relatives au prix de la communication et/ou de données de configuration du réseau ;
des informations correspondant au trajet optimisé sont renvoyées vers le centre de commutation de services mobiles visité (5) ; et
une connexion de télécommunication depuis le centre de commutation de services mobiles visité (5) vers le centre de commutation de services mobiles d'un abonné appelé (8) est établie sur la base des informations correspondant au trajet optimisé.

2. Procédure selon la revendication 1, **caractérisée en ce que** la position de l'équipement formant terminal d'un abonné appelé (2) dans le réseau de télécommunications (7) est déterminée en sollicitant des données de position relatives à l'abonné appelé auprès du registre de localisation nominal de l'abonné appelé (4).

3. Procédure selon la revendication 1 ou 2, **caractérisée en ce que** la position de l'équipement formant terminal d'un abonné appelant (1) dans le réseau de télécommunications (7) est déterminée en sollicitant des données de position relatives à l'abonné appelant auprès du registre de localisation nominal de l'abonné appelant (3) ; ou
en envoyant des données de position relatives à l'abonné appelant depuis le centre de commutation de services mobiles visité (5) vers le serveur de communication (6).

4. Procédure selon l'une quelconque des revendications 1 à 3, **caractérisée en ce que** les alternatives de routage de la connexion de télécommunications qui doit être établie sont déterminées au moyen du serveur de communication (6) sur la base du numéro MSISDN et/ou du numéro de référence de l'abonné appelé ;
des données relatives au prix de la communication correspondant à l'alternative de routage sont déterminées au moyen du serveur de communication (6) ;
un trajet optimisé depuis le centre de commutation de services mobiles visité (5) vers le centre de commutation de services mobiles d'un abonné appelé (8) est déterminé au moyen du serveur de communication (6) ; et
des informations correspondant au trajet optimisé sont renvoyées vers le centre de commutation de services mobiles visité (5).

5. Procédure selon l'une quelconque des revendications 1 à 4, **caractérisée en ce que** les données relatives au prix de la communication et/ou les données de configuration du réseau dans le serveur de communication (6) sont mises à jour.

6. Système d'établissement d'une connexion de télécommunication dans un réseau de télécommunications (7) comprenant un équipement formant terminal d'un abonné appelant (1), un équipement formant terminal d'un abonné appelé (2), un registre de localisation nominal (3) de l'abonné appelant, un registre de localisation nominal (4) de l'abonné appelé, un centre de commutation de services mobiles visité d'un abonné appelant (5), un serveur de communication (6) pour optimiser le trajet de la connexion qui doit être établie, et un centre de commutation de services mobiles d'un abonné appelé (8), le système étant **caractérisé en ce que** :
le centre de commutation de services mobiles visité (5) est configuré de façon à établir une connexion de télécommunication avec le serveur de communication (6) lorsque le centre de commutation de services mobiles visité (5) reçoit une requête d'établissement de connexion de l'équipement formant terminal d'un abonné appelant (1), et de façon à établir une connexion de télécommunication avec le centre de commutation de services mobiles d'un abonné appelé (8) sur la base de données relatives à un abonné appelé correspondant à un trajet optimisé ; et
le serveur de communication (6) est configuré de façon à déterminer la position de l'équipement formant terminal d'un abonné appelant (1) dans le réseau de télécommunications (7), à déterminer la position de l'équipement formant terminal d'un abonné appelé (2) dans le réseau de télécommunications (7), à optimiser le trajet de la connexion de télécommunications qui doit être établie sur la base de données relatives au prix de la communication et/ou de données de configuration du réseau, et à renvoyer des informations correspondant au trajet optimisé vers le centre de commutation de services mobiles visité (5).

7. Système selon la revendication 6, **caractérisé en ce que** :
le système comprend des moyens pour mettre à jour les données relatives au prix de la communication et/ou les données de configuration du réseau qui sont stockées dans le serveur de communication (6).
